# EUROPEAN PATENT SPECIFICATION

(11) **EP 3 319 998 B1**
(45) Date of publication and mention of the grant of the patent: **16.08.2023**
(21) Application number: 16739075.6
(22) Date of filing: 08.07.2016
(51) Int. Cl.: C08B 15/06, B01J 20/28

(54) **AMINE-FUNCTIONALIZED FIBRILLATED CELLULOSE FOR CO2 ADSORPTION AND METHODS FOR MAKING SAME**
AMINOFUNKTIONALISIERTE FIBRILLIERTE CELLULOSE ZUR CO2-ADSORPTION UND VERFAHREN ZUR HERSTELLUNG DAVON
CELLULOSE FIBRILLÉE À FONCTION AMINE POUR ADSORPTION DE CO2 ET LEURS PROCÉDÉS DE FABRICATION

(30) Priority: 10.07.2015 EP 15176317
(43) Date of publication of application: 16.05.2018
(73) Proprietor: Climeworks AG, 8050 Zürich (CH)
(72) Inventor: MALUSZYNSKA-HOFFMAN, Maria, 8050 Zürich (CH); REPOND, Nicolas, 8050 Zürich (CH); WURZBACHER, Jan André, 8050 Zürich (CH); GEBALD, Christoph, 8050 Zürich (CH)
(74) Representative: Bremi, Tobias Hans
(86) International application number: PCT/EP2016/066312
(87) International publication number: WO 2017/009241

(56) References cited:
- WO-A1-2012/168346
- CHRISTOPH GEBALD ET AL: "Single-Component and Binary CO2 and H2O Adsorption of Amine-Functionalized Cellulose", ENVIRONMENTAL SCIENCE & TECHNOLOGY, vol. 48, 29 January 2014 (2014-01-29), XP055220527, US ISSN: 0013-936X, DOI: 10.1021/es404430g

## Description

### TECHNICAL FIELD

The present invention relates to amine-functionalized fibrillated cellulose as adsorbent structure for adsorption of carbon dioxide (CO₂) from a gas mixture, to methods for producing such structures and to uses thereof.

### PRIOR ART

Gas separation by adsorption has many different applications in industry, for example removing a specific component from a gas stream, where the desired product can either be the component removed from the stream, the remaining depleted stream, or both. Thereby both, trace components as well as major components of the gas stream can be targeted by the adsorption process.

One important application is capturing carbon dioxide (CO₂) from gas streams, e.g., from flue gases, exhaust gases, industrial waste gases, or atmospheric air.

Capturing CO₂ directly from the atmosphere, referred to as direct air capture (DAC), is one of several means of mitigating anthropogenic greenhouse gas emissions and has attractive economic perspectives as a non-fossil, location-independent CO₂ source for the commodity market and for the production of synthetic fuels. The specific advantages of CO₂ capture from the atmosphere include: (i) DAC can address the emissions of distributed sources (e.g. cars, planes), which account for a large portion of the worldwide greenhouse gas emissions and can currently not be captured at the site of emission in an economically feasible way; (ii) DAC can address emissions from the past and can therefore create truly negative emissions; (iii) DAC systems do not need to be attached to the source of emission but are rather location independent and can for example be located at the site of further CO₂ processing; and (iv) if CO₂ that was captured from the atmosphere is used for the production of synthetic hydrocarbon fuels from renewable energy sources, truly non-fossil fuels for the transportation sector can be obtained, that create no or very few net CO₂ emissions to the atmosphere.

Several DAC methods have recently been developed based on various technological approaches. For example, US 8,163,066 discloses carbon dioxide capture/regeneration structures and techniques; US 2009/0120288 discloses a method for removal of carbon dioxide from air; US 2012/0174778 discloses a carbon dioxide capture/regeneration method using a vertical elevator; and WO-A-2010022339 discloses a carbon dioxide capture method and facility.

One particular DAC approach is based on a cyclic adsorption/desorption process on solid, chemically functionalized adsorbent materials. For example, in WO2010091831 a structure based on amine functionalized adsorbent materials together with a cyclic adsorption/desorption process using this material for the extraction of carbon dioxide from ambient atmospheric air is disclosed.

Therein, the adsorption process takes place at ambient atmospheric conditions at which air is streamed through the sorbent material and a portion of the CO₂ contained in the air is chemically bound at the surface of amine functionalized adsorbents. During the subsequent desorption, the material is heated and the partial pressure of carbon dioxide surrounding the adsorbent is reduced by applying a vacuum or exposing the adsorbent to a purge gas flow. Thereby, the previously captured carbon dioxide is removed from the adsorbent material and obtained in a concentrated form.

In WO-A-2012/168346, an adsorbent material based on an amine functionalized fibrillated cellulose is disclosed, which can be used for the above described process.

In WO-A-2014/170184 a low pressure drop structure composed of particle adsorbent beds is disclosed which can be used for the above described process.

For economical application of amine functionalized fibrillated cellulose adsorbents cost and energy efficient production processes on an industrial scale are needed. Generally the production of amine functionalized fibrillated cellulose adsorbents comprises the four steps of (i) supplying aqueous fibrillated cellulose suspension, (ii) mixing the aqueous fibrillated cellulose suspension with a reagent for attaching amine moieties to the fibrillated cellulose, (iii) bringing the amine/fibrillated cellulose suspension into a desired form or shape to be dried and finally (iv) drying the amine/fibrillated cellulose suspension, see e.g. WO-A-2012/168346. The amine moieties can be added to the aqueous fibrillated cellulose suspension not requiring solvent exchange to organic media. Amine moieties compatible to aqueous media are aminosilanes and polyamines, where aminosilanes are preferably applied since aminosilanes can be covalently attached to the cellulose backbone via formation of Si-O-C bonds. Vast scientific and patent literature exists on production step (i) comprising the disintegration of cellulose fibers to yield fibrillated cellulose, however, little is known about productions steps (ii)-(iv) specifically and the production of amine functionalized fibrillated cellulose adsorbents feasible for CO₂ capture in general.

Fibrillated cellulose is an especially suitable support material for production of amine functionalized adsorbents, since (i) cellulose is rich in surface functional groups (hydroxyl groups) which can be used to anchor amine functionalities covalently to the cellulose backbone, (ii) cellulose is a re-growing resource and the most abundant biopolymer on this planet, (iii) amine functionalization of cellulose is possible in water not requiring organic solvents and finally, (iv) cellulose is an economical solid adsorbent support.

Cellulose is obtained from plants in the form of fibers having a diameter of about 30 to 100 µm and a length of several millimeters. In turn cellulose fibers are composed of cellulose microfibrils with a diameter of 2 to 10 nm and a length of several tens of µm formed during biosynthesis in higher plants. In order to increase the surface area for surface modification, e.g. amine functionalization, it is desirable to disintegrate cellulose fibers to yield fibrillated cellulose, which can be generally defined as a mixture of cellulose microfibril agglomerates having dimensions smaller than the original cellulose fibers. The disintegration of cellulose fibers to fibrillated cellulose is well known and was e.g. described in US 4483743. Up to now several processes have been described in the literature, which are feasible for the production of fibrillated cellulose, as e.g. summarized in US-A-2014/0124150 or WO-A-2004009902: cryocrushing, homogenization, microfluidization, micro-grinding and refining. In order to facilitate disintegration of cellulose fibers chemical and enzymatic pretreatments have been described, as summarized in US 2014/0124150. Depending on the degree of fibrillation and the disintegration method used, the resulting fibrillated cellulose has differing fiber dimensions, e.g. a combination of homogenization and microfluidization is known to yield highly disintegrated fibrillated cellulose, where micro-grinding or refining result in moderately disintegrated fibrillated cellulose. Further it is known that chemical or enzymatic pretreatment is useful in cutting the cellulose fibrils, however, such pretreatment is not efficient in additionally decreasing the diameter of the fibrillated cellulose. In the literature several notations exist, which describe products having similar dimensions to the fibrillated cellulose described here, where the most important notations are nanofibrillated cellulose (abbreviated as NFC), microfibrillated cellulose (abbreviated as MFC), cellulose nanowhiskers, cellulose nanocrystals, nanocellulose, cellulose nanofibrils or cellulose microfibrils.

In contrast to disintegration of cellulose fibers to yield fibrillated cellulose little is known about energy and cost efficient production of amine functionalized fibrillated cellulose as an adsorbent feasible for CO₂ capture. WO-A-2012168346 (and equally Gebald et al in Environmental Science & Technology, Vol. 48, pp. 2497-2504, 2014, Environmental Science & Technology, Vol. 47, pp. 10063-10070, 2013 and Environmental Science & Technology, Vol. 45, pp. 9101-9108, 2011) describes the structure of amine functionalized fibrillated cellulose adsorbents useable for CO₂ capture and their production via freeze or air drying. WO-A-2010066905 discloses films and particles composed of silane (including aminosilanes) functionalized fibrillated cellulose, produced by first mixing aminosilanes with a fibrillated cellulose suspension and then drying such an aqueous aminosilane/fibrillated cellulose suspension through air drying, heating, vacuum drying or spray drying (generally through evaporative drying).

This is where the present invention shall contribute an improvement.

### SUMMARY OF THE INVENTION

It is thus an object of the present invention to provide novel processes to produce amine-functionalized fibrillated cellulose, amine-functionalized fibrillated cellulose as such and uses thereof.

This and other objects are achieved by the method as claimed in the attached claims and by the corresponding resultant amine-functionalized fibrillated cellulose in granular form.

Somewhat more specifically, the present invention relates to a method for the preparation of amine-functionalized fibrillated cellulose for reversible CO₂ adsorption from a gas mixture, in particular from exhaust gases or ambient air. The proposed method includes the following steps, it may however include further steps preceding or following these steps, the steps (i)-(iii) are carried out in the given order:
(i) providing a suspension of fibrillated cellulose and adding a reagent as claimed for providing amine functionalities to the fibrillated cellulose;
(ii) mixing (e.g. in a kneader) the resulting suspension for a time span allowing for the formation of a homogeneous suspension of fibrillated cellulose mixed and/or adsorbed and/or reacted with said reagent for providing amine functionalities;
(iii) drying the resulting homogeneous suspension from step (ii) resulting in surface amine-functionalized fibrillated cellulose and converting it into granular form with a bulk density of at least 150 kg/m3.

The bulk density according to this specification is determined according to the standard method in this field namely according to ISO 697 (Version 2010), where in a first step granulate material to be measured is filled into a funnel until it is completely filled and where the outlet is closed by a moveable plate. In a second step that moveable plate is opened fast so that the granulate material flows into a receiver of known volume. Finally the bulk density is determined through weighing the receiver. All measurements are performed at room temperature. Specifically the bulk density can be measured using an apparatus for the determination of bulk density as available by Powtec Maschinen und Engineering GmbH, Germany.

Unexpectedly, by using one of the approaches given below, the above-mentioned exceptional high bulk density can be achieved hitherto unavailable using the methods according to the prior art.

More specifically, when carrying out this method, either
(a) in step (i) a suspension of fibrillated cellulose is provided with a dry mass content of fibrillated cellulose of at least 15%, wherein the mixed suspension with the reagent for providing amine functionalities, preferably in the form of an aqueous solution, has a dry mass content of fibrillated cellulose and reagent for providing amine functionalities of at least 20%, and wherein step (iii) involves freeze-drying of the surface amine-functionalized fibrillated cellulose
or (b) in step (iii) fluidized spray drying is used for at the same time drying and converting into granular form.

The dry mass content is throughout the whole document to be understood as the dry matter content, i.e. the ratio of the mass of a test sample after drying to its mass as the time of sampling and before drying, wherein typically drying takes place at a temperature of (105±2)°C over a time span of at least 16 h and not more than 24 h (see also Norm SCAN-CM 39:94 of the Scandinavian Pulp and Paper Board Testing Committee).

Starting the step (i) with a dry mass content of fibrillated cellulose of at least 15% the higher dry mass content of at least 20% can be achieved by adding the reagent for providing amine functionalities in a high dry weight suspension.

As a matter of fact, under the unifying concept of actually being able to provide the corresponding functionalized fibrillated cellulose with the defined high bulk density, these two approaches (a) and (b) are possible.

As concerns approach (a), the prior art methods were always using much lower solids contents in step (i), as it was deemed impossible to actually work with the high viscosity fibrillated cellulose suspensions as proposed here, on the one hand due to the high mechanical requirements for kneading, and on the other hand since the skilled person has to assume that under these conditions the mixing with the functionalizing agent (reagent for providing amine functionalities) would not go through to lead to a sufficiently homogeneous surface functionalization upon drying. Using the lower solids contents in step (i) furthermore suffered a low bulk density when combined with freeze-drying processes. With the proposed approach unexpectedly high bulk density granular surface functionalized fibrillated cellulose can be made available which has a high reversible carbon dioxide capture ability. Correspondingly therefore in the same volume, without leading to a high pressure drop, a large mass of capture material can be provided leading to an overall higher carbon dioxide capture ability per volume. Furthermore the energy consumption during the drying process can be reduced significantly due to the fact that the starting suspension has a much lower water content. So also from an economical viewpoint the proposed method has significant advantages.

As concerns approach (b) it was found out, as will be detailed further below, that if spray drying is used, the resulting particles are too small leading to a high pressure drop over the corresponding bed of particles in a carbon dioxide capture process. Also it was found out that subsequent granulation in order to obtain larger particles, e.g. by use of post granulation, for example using fluidized bed granulation, does not lead to granules which have the desired particle size, and furthermore does not lead to granules which have the desired carbon dioxide capture ability. Only if the very specific process of using fluidized bed granulation spray drying, in which at the same time spray drying and granulation take place, i.e. granulation takes place while the small particles have not yet dried completely, allows the provision of high bulk density particles or granules which have the desired particle size to allow for a reasonable pressure drop over a corresponding carbon dioxide capture bed.

Aminosilane/fibrillated cellulose films and particles dried via air drying, heating or vacuum drying according to the prior art yield hornified structures with limited porosity thus not ideal to be used as adsorbent for CO₂ capture. Spray dried particles generally can be used as adsorbent for CO₂ capture, however, the dried particles feature very small particle size generally well below 100 µm resulting in excessive pressure drop for a CO₂ capture process as e.g. described in WO-A-2014/170184. JP2008266630 discloses, as a way out of this, films composed of silane (including aminosilanes) functionalized fibrillated cellulose, which were produced by firstly performing a solvent exchange to an organic solvent, secondly drying such organic solvent suspension under ambient conditions or through heating, thirdly immersing the dried fibrillated cellulose film in a suspension carrying at least an aminosilane and fourthly drying the aminosilane-coated film. As described above, it is known that air drying or heating of fibrillated cellulose suspensions leads to hornified films with no or very limited porosity. Air drying or heating from organic solvents reduces the degree of hornification, but by no means prevents it. Consequently the structures of JP2008266630 also are not ideal to be used as CO₂ adsorbents.

Finally literature fails to disclose or predict how production steps (i)-(iv) according to the state of the art and as outlined above for the production of amine functionalized fibrillated cellulose adsorbents useable for CO₂ capture influence each other, e.g. literature either doesn't disclose how the degree of disintegration of fibrillated cellulose influences the drying of the suspension or doesn't disclose drying processes feasible to be used on an industrial scale.

According to a 1^{st} preferred embodiment, within (a) the suspension of fibrillated cellulose provided in step (i) has a dry mass content of fibrillated cellulose of at least 20%, preferably of at least 25%, preferably of no more than 35% or 40%, most preferably in the range of 25-35%.

Preferably such a suspension has a viscosity in the range of 0.06-0.19 Pa*s (depending on the quality of fibrillated cellulose) at a shear rate of 1000/s (see Example 12) and at a temperature of 23 °C.

Depending on the reagent for providing amine functionalities used in the synthesis different dry mass contents of fibrillated cellulose and reagent for providing amine functionalities may result.

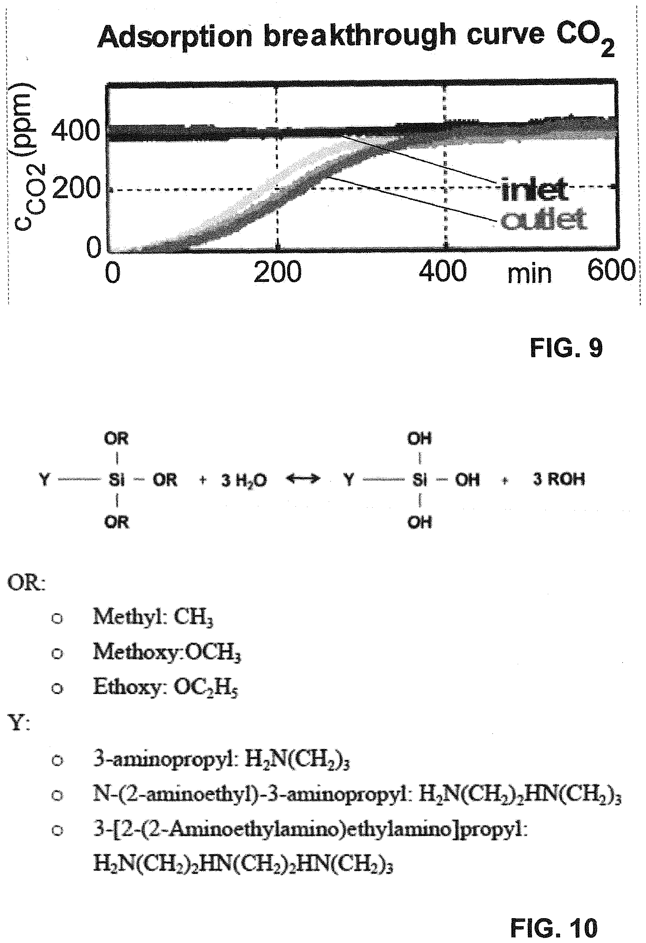

For example a preferred reagent for providing amine functionalities to the fibrillated cellulose is 3-aminopropylmethyldiethoxysilane, which, once in contact with water, hydrolyzes so that the ethoxy functional groups react exothermically with water yielding silanol groups and releasing ethanol, schematically shown in Figure 10. Consequently, per 1g 3-aminopropylmethyldiethoxysilane a maximum of about 0.7g of 3-aminopropylmethyldisilanol (which is then the active reagent for providing amine functionalities) can be obtained, depending on the degree of condensation between aminosilane moieties. Thus, the resulting solution contains 3-aminopropylmethyldisilanol, ethanol and water. Since the presence of ethanol might require explosion proof equipment for production it is desirable to first hydrolyze aminosilane moieties and second remove the resulting organic solvent (ethanol or methanol) via e.g. distillation eventually yielding a solution containing 50-70% w/w hydrolyzed aminosilane functionalities as active reagent for providing amine functionalities and the remainder is water, enabling a fully water based system for downstream processing.

In contrast polyamines as reagents for providing amine functionalities do not hydrolyze in water and hence 1g of polyamine contains 1g of active reagent for providing amine functionalities.

For simplicity, addition of reagent for providing amine functionalities in the following is quantified in grams of pristine reagent for providing amine functionalities solution per grams of fibrillated cellulose, independent of the nature of reagent for providing amine functionalities, i.e. 1g of 3-aminopropylmethyldiethoxysilane addition results in effective active ingredient (active reagent for providing amine functionalities) of 0.7g and 1g of polyamine addition results in 1g of active ingredient, however, both of them count as 1g of pristine reagent for providing amine functionalities.

In contrast for total dry mass content quantification of fibrillated cellulose and amine functionality only the amount of active ingredient (active reagent for providing amine functionalities) plus dry mass weight of fibrillated cellulose counts.

According to yet another preferred embodiment, within (a) the mixed suspension resulting from step (i) has a dry mass content of fibrillated cellulose and active reagent for providing amine functionalities of at least 18%, preferably of at least 30%, most preferably of at least 35%, preferably of no more than 72%, most preferably in the range of 30-45%.

According to a further preferred embodiment in step (i) the reagent for providing amine functionalities is added in the form of an aqueous solution of the reagent for providing amine functionalities.

According to the invention, the solution of said reagent for providing amine functionalities is comprising at least one monoalkyldialkoxyaminosilane and is added in step (i) such that the aminosilane concentration in the mixed suspension is at least 0.5 g, preferably at least 1 g, most preferably in the range of 1 - 2 g, preferably no more of 3 g of pristine aqueous aminosilane suspension per 1 g of fibrillated cellulose.

Furthermore it is preferred, if the aqueous solution of said reagent for providing amine functionalities, which is comprising at least one monoalkyldialkoxyaminosilane, added in step (i) is provided as an aqueous solution in a concentration of at least 40% w/w, preferably at least 50% w/w, most preferably in the range of 50 - 80 % w/w.

Preferably the reagent for providing amine functionalities is provided as an aqueous solution free of organic solvents and/or wherein aqueous suspension resulting from step (i) is free of organic solvents.

Generally it is preferred, that the coupling agent is selected from at least one system of the following group: 3-aminopropylmethyldiethoxysilane; 3-aminopropylmethyldimethoxysilane; 3-aminopropyltriethoxysilane; 3-aminopropyltrimethoxysilane; N-(2-Aminoethyl)-3-aminopropyl-methyldimethoxysilane; N-(3 -Methyl dimethoxysilylpropyl)diethyl enetriamine; N-(2-Aminoethyl)-3-aminopropyltrimethoxysilane; N-(2-Aminoethyl)-3-aminopropyl-triethoxysilane; N-(3-Trimethoxysilylpropyl)diethylenetriamine; 3-aminopropylmethyldisilanol and its self-condensed moieties in aqueous suspension; 3-aminopropyltrisilanol and its self-condensed moieties in aqueous suspension; as well as mixtures thereof.

According to yet another preferred embodiment, within (a) said step (ii) involves kneading of the mixed suspension over a time span of at least 5 or 10 min, preferably of at least 15 min, most preferably in the range of 20 - 120 min.

According to another preferred embodiment, within (a) said step (ii) involves kneading of the mixed suspension at a temperature maintained over the process in the range of 5 - 35 °C, preferably in the range of 15 - 28 °C.

Further preferably, within (a) said step (ii) involves kneading of the mixed suspension in an extrusion scroll kneader at a scroll speed of at least 10 rpm, preferably at least 15 rpm, and/or at an extruder speed of at least +/-30 rpm, preferably of at least +/-40 rpm.

Within (a) in step (iii) the homogeneous suspension resulting from step (ii) can be formed into granular form, preferably by pressing it through a multi-perforated plate, most preferably with openings of a diameter in the range of 2-10 mm or 3 - 7 mm, and/or by breaking into small, irregular particles, preferably particles of 2 - 5 mm diameter, using a finisher, and wherein the granules are subsequently frozen, for example either by immersion in liquid nitrogen, by a liquid nitrogen spray, by any cold gas, by contact to cold surfaces, where the temperature of the cold gas or cold surface is at -15 °C or lower and then dried.

Within (a) in step (iii) the drying can also be carried out as a freeze-drying, wherein preferably during the freeze-drying process the granules are agitated, preferably using a non-heated mixing screw. However, also other mixer types can be used, e.g. Lödige type plugshare batch mixers as supplied by Gebrüder Lödige Maschinenbau LLC, Germany. Low, medium or high quality fibrillated cellulose or a mixture thereof can be applied as solid support for the adsorbent.

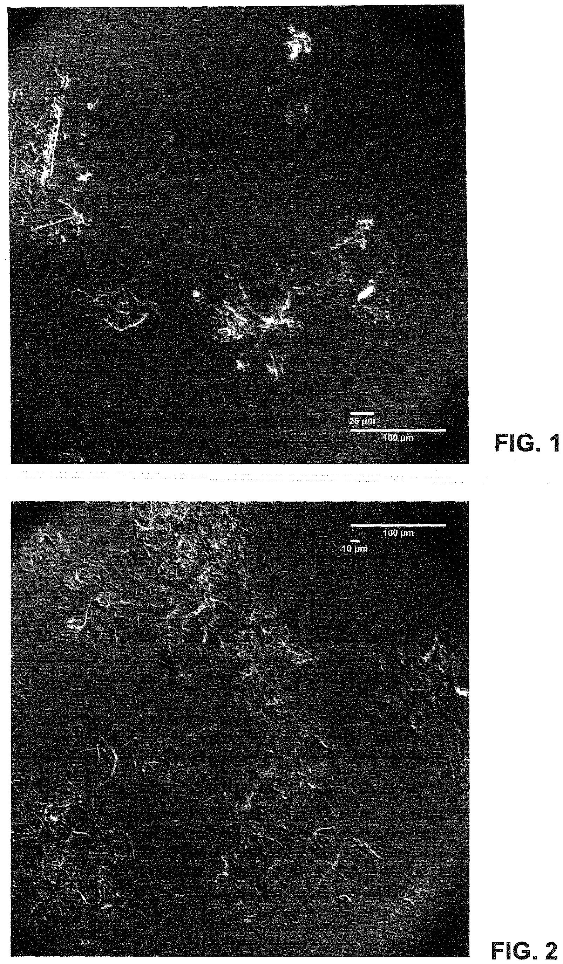

Medium quality cellulose microfibril agglomerates according to the specifications given here (e.g. produced as described in Example 1) have diameters mostly below 10 µm and lengths below 250 µm. As Figure 2 shows medium quality fibrillated cellulose features a degree of entanglement with individual microfibril agglomerates entangled among each other over regions of several 100 µm times several 100 µm.

High quality fibrillated cellulose as to be understood according to the present invention (e.g. produced as described in Example 2) are those where cellulose microfibril agglomerates have diameters mostly below 5 µm and length below 100 µm. Moreover, high quality fibrillated cellulose is disintegrated and regions where the microfibril agglomerates are entangled among each other span several 10 µm times several 10 µm and are consequently smaller than for medium quality fibrillated cellulose.

The resultant granular amine-functionalized fibrillated cellulose preferably has a bulk density of at least 170 kg/m3, preferably of at least 180 kg/m3, most preferably of at least 200 kg/m3, or has a bulk density in the range of 150-550 kg/m3, preferably in the range of 200-450 kg/m3.

The resultant granular amine-functionalized fibrillated cellulose fibrillated cellulose preferably furthermore has an equilibrium CO₂ adsorption capacity of at least 0.8 mmol CO₂/g, preferably of at least 1.0 mmol CO₂/g, most preferably of at least 1.2 mmol CO₂/g, or in the range of 0.8-2.5 mmol CO₂/g, preferably in the range of 1-2.5 mmol CO₂/g, in each case at 40-50 Pa CO₂ partial pressure, 30 °C and 60% relative humidity for prior CO₂ desorption at 90°C in a flow of humidified nitrogen.

Depending on the processes and the desired properties different particle sizes can be established. The particle sizes should be adapted such that the pressure drop over a corresponding adsorption bed in a carbon dioxide capture process is not too high. According to a preferred embodiment, the resultant granular amine-functionalized fibrillated cellulose has a particle size distribution so that 50% of particles with respect to particle volume have a particle size of at least 80 µm, preferably of at least 100 µm, most preferably of at least 240 µm.

Within (b) medium or high quality fibrillated cellulose is used in step (i). As a matter of fact it was found out that using low quality fibrillated cellulose may cause problems when using the method according to (b).

Within (b) in step (i) a fibrillated cellulose suspension with a dry mass content of 5-15% w/w can be used and the mixed suspension with the aqueous solution of a coupling agent has a dry mass content of fibrillated cellulose and coupling agent of in the range of 5-15% w/w.

Furthermore the present invention relates to an amine-functionalized fibrillated cellulose for reversible CO₂ adsorption from a gas mixture, in particular from exhaust gases or ambient air. The proposed surface functionalized fibrillated cellulose is preferably prepared using a method as outlined above. The amine-functionalized fibrillated cellulose has a bulk density of at least 150 kg/m3, preferably of at least 180 kg/m3, most preferably of at least 200 kg/m3, or has a bulk density in the range of 150-450 kg/m3, preferably in the range of 200-400 kg/m3.

According to a 1^{st} preferred embodiment, this amine fibrillated cellulose has an equilibrium CO₂ adsorption capacity of at least 0.8 mmol CO₂/g, preferably of at least 1.0 mmol CO₂/g, most preferably of at least 1.2 mmol CO₂/g, or in the range of 0.8-2.5 mmol CO₂/g, preferably in the range of 1-2 mmol CO₂/g, in each case at 40-50 Pa CO₂ partial pressure, 30 °C and 60% relative humidity for prior CO₂ desorption at 90°C in a flow of humidified nitrogen.

According to another preferred embodiment, it has a particle size distribution so that 50% of particles with respect to particle volume have a particle size of at least 80 µm, preferably of at least 100 µm, most preferably of at least 240 µm.

The amine-functionalized fibrillated cellulose particles may have an average diameter (d50) in the range of 100 µm-5 mm, preferably either in the range of 100-300 µm or in the range of 0.5-2.5 mm.

Furthermore the present invention relates to the use of amine-functionalized fibrillated cellulose as detailed above, preferably produced using a method as detailed further above, for reversible CO₂ adsorption from a gas mixture, in particular from exhaust gases or ambient air.

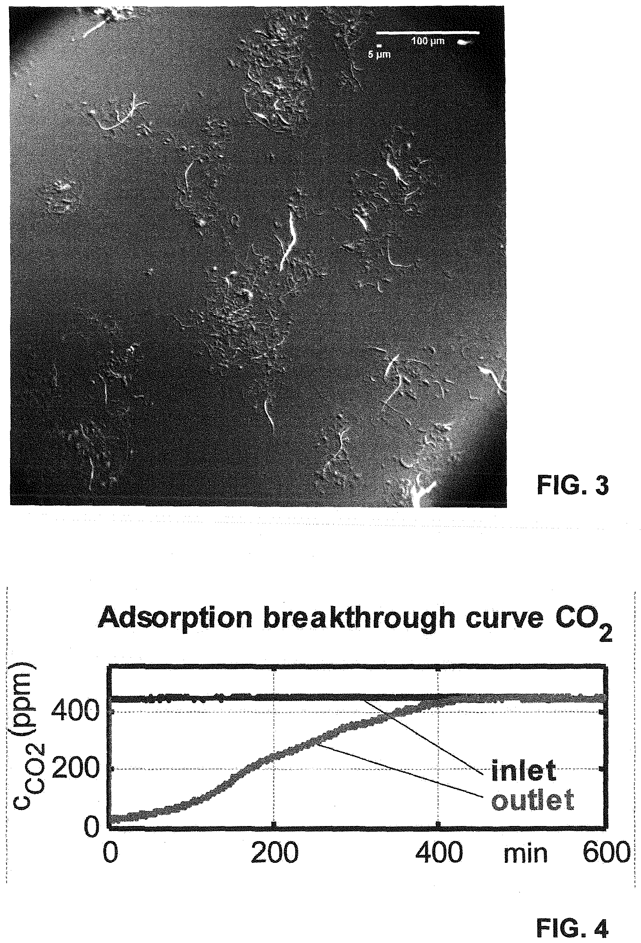

With regard to production step (i) defined above it was found that the degree of disintegration of fibrillated cellulose can have a significant influence on the drying process which can be used for industrial production of amine functionalized fibrillated cellulose adsorbents. Prior art WO-A-2012168346 defines fibrillated cellulose feasible for production of amine functionalized fibrillated cellulose adsorbents as a network of cellulose microfibril agglomerates that have a diameter of 4 nm to 1 µm and a length of 100 nm to 1 mm, occasionally containing cellulose microfibril agglomerates having a diameter of more than 1 µm, which can be a desired property of the product. This patent application further specifies the definition of fibrillated cellulose suitable for the production of amine functionalized fibrillated cellulose adsorbents and introduces three quality categories below. Generally quantification of fibrillated cellulose quality is experimentally challenging. In this application the quality of fibrillated cellulose is determined based on the dimensions of the microfibril agglomerates observed via optical microscopy (250x magnification of 0.5% w/w aqueous fibrillated cellulose suspension).
- Low quality fibrillated cellulose: Figure 1 shows an optical microscopy image of low quality fibrillated cellulose as to be understood according to the present application. From Figure 1 it can be concluded that the low quality cellulose microfibrils have diameters mostly below 20 µm and lengths below 500 µm. Moreover, Figure 1 shows that low quality fibrillated cellulose features a low degree of disintegration, where partially the form of the original cellulose fiber can be observed, which in turn is fibrillated on its surface. Hence, low quality fibrillated cellulose are more like surface fibrillated cellulose fibers, rather than an entangled web of cellulose microfibril agglomerates, as it is the case for medium quality fibrillated cellulose.
- Medium quality fibrillated cellulose: Figure 2 shows an optical microscopy image of medium quality fibrillated cellulose as to be understood according to the present invention (produced as described in Example 1). From Figure 2 it can be concluded that in this case cellulose microfibril agglomerates have diameters mostly below 10 µm and length below 250 µm. Moreover, Figure 2 shows that medium quality fibrillated cellulose features a high degree of entanglement with individual microfibril agglomerates entangled among each other over regions of several 100 µm times several 100 µm.
- High quality fibrillated cellulose: Figure 3 shows an optical microscopy image of high quality fibrillated cellulose as to be understood according to the present invention (produced as described in Example 2). From Figure 3 it can be concluded that cellulose microfibril agglomerates have diameters mostly below 5 µm and length below 100 µm. Moreover, Figure 3 shows that high quality fibrillated cellulose is highly disintegrated and regions where the microfibril agglomerates are entangled among each span several 10 µm times several 10 µm and are consequently smaller than for medium quality fibrillated cellulose.

Together low, medium and high quality fibrillated cellulose are referred to as fibrillated cellulose within the context of this application. As further outlined below, it was for example found that amine functionalized fibrillated cellulose adsorbents showed favorable properties when dried via freeze drying essentially independent of the quality of fibrillated cellulose. In contrast it was for example found that amine functionalized fibrillated cellulose adsorbents primarily showed favorable properties when dried via fluidized bed spray drying if medium or high quality fibrillated cellulose was used as solid support. Prior art neither discloses the observation given above nor gives ideas to predict the behavior given above.

With regard to production step (ii) defined above, prior art production of amine-functionalized fibrillated cellulose adsorbents exclusively used stirring at low dry mass content (amine functionality + fibrillated cellulose), e.g. 3.5% w/w in Example 3, 1.8% w/w in Example 6, 3.3% w/w in Example 7 and 8, 1.9% w/w in Example 9 and 10, 1.7% w/w in Example 11, 12, 13 and 3.2% w/w in Example 14 and 15 of WO-A-2012168346. Prior art used only low dry mass content for mixing of amine functionality and fibrillated cellulose since fibrillated cellulose has high viscosity and assuring good mixing with conventional stirring apparatuses (magnetic stirrer, overhead stirrer) was only possible at low dry mass content. In the context of this application it was found that kneading of highly concentrated aminosilane/fibrillated cellulose suspensions (dry mass content e.g. above 20%) is feasible for assuring high degree of mixing of amine moieties and fibrillated cellulose and if dried yields adsorbents with CO₂ adsorption characteristics (CO₂ adsorption equilibrium capacity and CO₂ uptake rate) similar to low dry mass content stirring as shown in the Examples below. The kneading process described here is superior to prior art stirring because it addresses several weaknesses of the stirring process: The amount of water, which needs to be removed during subsequent drying operation is reduced and consequently capital cost and operational cost of drying are reduced, i.e. in the case of freeze drying a suspension having a dry mass content of 5% w/w results in 19 kg of ice removal per 1 kg of final adsorbent where in contrary a suspension having a dry mass content of 20% w/w results in 4 kg of ice removal per 1 kg of adsorbent, which reduces the output capacity per plant size as well as it reduces the energy consumption per product. One could argue that in order to address above challenges of low dry mass content stirring of suspensions, the suspension could be dewatered prior to drying operation. In theory such dewatering is possible, however, practically this dewatering step requires recycling of large quantities of aqueous amine solution, resulting in high equipment and monitoring cost (in some case even distillation of the recycle solution is necessary).

With regard to production step (iii) defined above it was found within (a) that dynamic freeze drying of the aminosilane/fibrillated cellulose suspension yielded adsorbent particles with favorable properties. Dynamic freeze drying is defined as freeze drying where the frozen particles are stirred in a freeze drying chamber or agitated or moved in another way in order to increase heat and mass transfer of the freeze drying application to eventually reduce the time needed for drying. In standard freeze drying application frozen particles are loaded on trays and neither agitated nor stirred (known from prior art WO-A-2012168346). The advantages of dynamic freeze drying in comparison to standard freeze drying are first lower operational cost, since the frozen particles can be fed and discharged easily from the drying chamber as bulk material where filling and emptying of standard freeze dryers requires multiple steps due to handling of several trays per freeze dryer chamber. The second advantage of dynamic freeze drying is reduced drying time in comparison to standard freeze drying since the mass and heat transfer is enhanced through stirring or agitation of the frozen product. The disadvantages of dynamic freeze drying are abrasion of particles due to stirring or agitation as well as potential melting of frozen particles due to heat released by friction between the stirred or agitated particles. However, it was found that both shortcomings of dynamic freeze drying in comparison to standard freeze drying are overcome by amine functionalized fibrillated cellulose: First it was shown that abrasion due to stirring or agitation is very small. This is explained by the entangled web of cellulose fibers preventing abrasion. Second it was shown that potential melting and consequently shrinking of particles during dynamic freeze drying has no damaging effect on the final product and favorable adsorbent properties can be achieved. In contrary, some abrasion as well as melting can be desired in order to increase the density of the final product.

With regard to production step (iii) defined above within (b) it was further found that fluidized bed spray drying is a feasible drying process yielding amine functionalized fibrillated cellulose adsorbents with favorable properties, if medium or high quality fibrillated cellulose, as defined above, is used as solid adsorbent support. Prior art discloses spray drying of aminosilane/fibrillated cellulose suspensions, however, the adsorbent properties are unfavorable, since the produced adsorbent has a particle size of smaller than 100 µm, more likely a particle size smaller than 75 µm, resulting in excessive pressure drop across packed beds of such adsorbent particles. It was further found that post-agglomeration of spray dried adsorbent particles indeed increases the particle size to a favorable range above 100 µm, however, the CO₂ capture capacity also drops below the required threshold value.

Favorable amine functionalized fibrillated cellulose adsorbent properties are therefore in summary defined as at least one of the following properties:
- Bulk density of adsorbent particles of minimum 150 kg/m3
- 50% of particles (volume based) having a particle size of at least 0.1 mm
- an equilibrium CO₂ adsorption capacity of at least 0.8 mmol CO₂/g at 50 Pa CO₂ partial pressure, 30 °C and 60% relative humidity for prior CO₂ desorption at 90°C in a flow of humidified nitrogen.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an optical microscopy image of a low quality fibrillated cellulose suspension with a dry mass content of 0.5% w/w;
- Fig. 2: shows an optical microscopy image of medium quality fibrillated cellulose suspension with a dry mass content of 0.5% w/w;
- Fig. 3: shows an optical microscopy image of high quality fibrillated cellulose suspension with a dry mass content of 0.5% w/w;
- Fig. 4: shows a breakthrough curve of adsorbent of Example 3;
- Fig. 5: shows a breakthrough curve of adsorbent of Example 5;
- Fig. 6: shows a scanning electron microscopy image of adsorbent particles featuring high quality fibrillated cellulose as matrix and fluidized bed spray drying as drying operation;
- Fig. 7: shows a scanning electron microscopy image of adsorbent particles featuring medium quality fibrillated cellulose as matrix and fluidized bed spray drying as drying operation;
- Fig. 8: shows a photography of adsorbent particles featuring low quality fibrillated cellulose as solid support;
- Fig. 9: shows a breakthrough curve of adsorbent of Example 10; and
- Fig. 10: shows a schematic of aminosilane hydrolysis.

### DESCRIPTION OF PREFERRED EMBODIMENTS

### Example 1. Production of fibrillated cellulose via micro-grinding process (medium quality fibrillated cellulose):

Elemental chlorine free (ECF, 10 kg dry mass) cellulose fibers (Zellstoff Stendal, Germany) were soaked in tap water at room temperature for 24 h having a dry mass content of 2% in order to let the fibers swell. Alternatively ECF can be pretreated in a pulper. The swollen ECF fibers were subsequently disintegrated in a micro-grinder (Masuko Sangyo Co. Ltd., Japan), equipped with silicon carbide grinding stones. The suspension was passed through the micro-grinder in 5 cycles at a flowrate of 5-10 L/min. After disintegration the suspension was dewatered by gravity filtration and subsequent pressing in a hydraulic press, where batches of fibrillated cellulose (batch size: 900 g, dry mass content 8%) were pressed at constant pressure of 20 bar for 120 seconds. The final dry mass content of the fibrillated cellulose suspension was 27%.

An optical microscopy image of the fibrillated cellulose suspension is shown in Figure 2 and interpretation of fiber dimensions is given above.

### (Comparative)

### Example 2. Production of fibrillated cellulose via homogenization and microfluidization process (high quality fibrillated cellulose)

Fibrillated cellulose was for example obtained through a combination of a swelling, homogenization and microfluidization process as for example described in Example 1 of patent application WO-A-2012168346.

An optical microscopy image of exemplary high quality fibrillated cellulose suspension is shown in Figure 3 and interpretation of fiber dimensions is given above.

### (Comparative)

### Example 3. Production of reference adsorbent featuring high quality fibrillated cellulose in accordance to prior art production procedure:

Fibrillated cellulose suspension as the one obtained in Example 2 was dewatered to yield a dry mass content of 9%. 100 g of 3-aminopropylmethyldiethoxysilane (APDES) were hydrolyzed in 344 g of deionized water overnight at room temperature under stirring. 555 g fibrillated cellulose (dry mass content 9%) as obtained from Example 2 were added to the APDES solution so that in total the suspension contains 2 g of APDES per 1 g of fibrillated cellulose (2:1). The resulting suspension contains a dry mass content of 11.8% and was stirred for 3 h. Finally the suspension was frozen in liquid nitrogen by pressing the suspension through a perforated metal plate with circular 5 mm diameter openings and then dried in a freeze dryer for 24 h at a pressure of 0.1-1 mbar and a shelf temperature of 5-60 °C. The adsorbent synthesis described in Example 3 is similar to adsorbent syntheses known from prior art, e.g. as described in WO-A-2012168346.

The resulting amine functionalized fibrillated cellulose adsorbent was tested for CO₂ adsorption as follows: 1 g was placed in an adsorption column having a diameter of 40 mm and a height of 30 mm. Prior to CO₂ adsorption the adsorbent was desorbed at 90 °C for 75 min in 2 L/min of nitrogen or alternatively pressurized air each containing a level of moisture corresponding to a dew point of 23 °C. For subsequent CO₂ adsorption 0.5 L/min air containing 400-550 ppm CO₂ (air for adsorption is taken from pressurized air network with fluctuating CO₂ concentration, depending on weather, day time, CO₂ sources next to the compressor, etc.), having a temperature of 30 °C and a relative humidity of 60% were streamed through the adsorption column for 12 h. The CO₂ concentrations up- and downstream of the adsorption column were measured through an infrared sensor and through integration of the difference of the two signals the amount of adsorbed CO₂ was calculated. For the adsorbent produced in Example 3 the adsorption capacity under the conditions specified above (which are used as standard conditions for all Examples herein) was 2.0 mmol CO₂/g. The adsorbent particles had a cylindrical shape with a diameter of 5 mm, a length of 10 mm and the bulk density was 70 kg/m3. The breakthrough curve of the CO₂ adsorption measurement is shown in Figure 4. After 100 min and 200 min of CO₂ adsorption roughly 1 mmol CO₂/g and 1.5 mmol CO₂/g, respectively, were adsorbed.

### Example 4. Mixing of aminosilane/medium quality fibrillated cellulose feed suspension via kneader

33 kg of fibrillated cellulose (dry mass content of 27%) produced as the one obtained in Example 1 was mixed with an aqueous suspension containing 3-aminopropylmethyldisilanol and its self-condensed moieties in a kneader (Extrusion-kneader, Type VIU, AMK, Germany) for 1 h (scroll speed 19 rpm, extruder speed -42 rpm).

The application of hydrolyzed 3-aminopropylmethyldiethoxysilane in organic solvent free aqueous suspension is favorable, since consequently the production process is water based and i.e. no explosion proof equipment is necessary finally reducing the cost of the production equipment. The aminosilane concentration was adjusted so that the suspension contained 1.5g of pristine aqueous aminosilane suspension per 1 g of fibrillated cellulose (1.5:1). Consequently in total the dry mass content of the suspension was 37%. Throughout the kneading process, the sorbent temperature was controlled and did not exceed 25 °C. The product was extruded from the kneader in one batch.

### Example 5. Standard freeze drying of aminosilane/medium quality fibrillated cellulose feed suspension

The suspensions obtained from Example 4 was pressed through a perforated metal plate with circular 5 mm openings and the resulting cylinders were frozen in a freezer at -65 °C. The frozen particles were subsquently dried in a freeze dryer for 24 h at a pressure of 0.1-1 mbar and a shelf temperature of -60 °C. The dried adsorbent was evaluated for CO₂ adsorption capacity as described in Example 3.

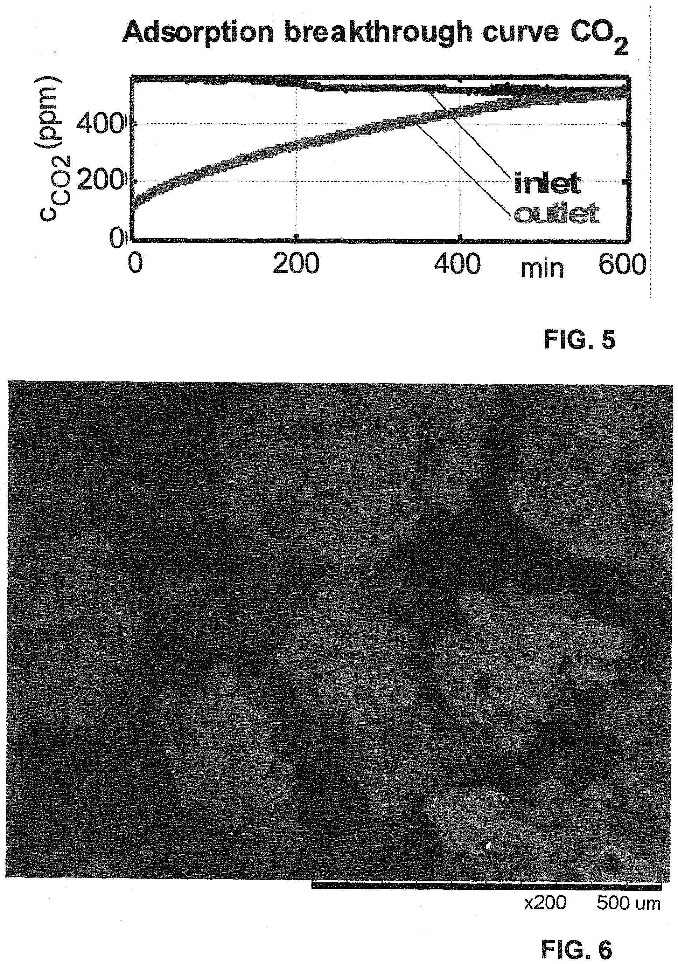

The CO₂ capture capacity of the 1.5:1 adsorbent was 1.9 mmol CO₂/g at the conditions specified in Example 3. The adsorbent particles had a cylindrical shape with a diameter of 5 mm, a length of 10 mm and the bulk density was 210 kg/m3. The breakthrough curve of the CO₂ adsorption measurement is shown in Figure 5. After 100 min and 200 min of CO₂ adsorption roughly 0.75 mmol CO2/g and 1.25 mmol CO₂/g, respectively, were adsorbed. In comparison to the reference adsorbent produced in Example 3, the adsorbent of Example 5 features slightly lower equilibrium CO₂ capacity (1.9 vs. 2 mmol CO₂/g), and slightly lower adsorbent kinetics (1.25 vas. 1.5 mmol CO₂/g after 200 min of CO₂ adsorption), however, three times higher density, which is favorable due to the higher CO₂ capacity per volume of capture system. The different shape of the breakthrough curves of Example 3 and 5 can be due to some bypassing in Example 5, due to the increased density of the adsorbent and consequently lower packing height. Further in comparison to the reference adsorbent produced in Example 3, the adsorbent of Example 5 features significantly more economical production procedure, since first medium quality fibrillated cellulose was applied vis-à-vis high quality fibrillated cellulose, second freezing in a freezer at -65 °C was applied rather than dropping the suspension in liquid nitrogen, third the suspension was kneaded at high dry mass content, consequently reducing the amount of water which has to be removed during freeze drying and increasing the density of the dried product and fourth less aminosilanes were used (1.5:1 vs. 2:1).

### Example 6. Standard freeze drying of aminosilane/medium quality fibrillated cellulose feed suspension and subsequent compacting and granulation

In order to further increase the density, the adsorbent of Example 5 was compacted and granulated using a Gerteis Mini-Polygran apparatus applying 1kN force during the compacting and a 3 mm sieve for the granulation. The dried amine functionalized fibrillated cellulose adsorbent particles are well suited for compacting and subsequent granulation and the resulting particles had an average particle size of 3 mm, a bulk density of 284 kg/m3 and the CO₂ capacity was 1.8 mmol CO₂/g at the conditions specified in Example 3.

In summary the following can be concluded:
1. Use of medium quality fibrillated cellulose, e.g. as obtained via a micro-grinding process, in combination with standard freeze drying, does not reduce the CO₂ capture capacity of amine functionalized fibrillated cellulose adsorbent in comparison to using high quality fibrillated cellulose as matrix. The usability of medium or low quality fibrillated cellulose as support matrix for CO₂ adsorbents is already known from prior art WO-A-2012168346. The advantage of using a micro-grinding process in comparison to a homogenization and subsequent microfluidization process is the reduced energy consumption and reduced capital cost of equipment.
2. Kneading of concentrated aminosilane/fibrillated cellulose suspension in comparison to previously used stirring of dilute suspension does not significantly reduce the CO₂ adsorption capacity of the adsorbent, but reduces energy consumption of the drying operation and creates adsorbent particles with favorable bulk density.
3. Compacting and granulation of dried particles does not significantly reduce the CO₂ capture capacity but further increases the bulk density of the adsorbent particles as well as granulation can be used to create favorable, homogenous particle sizes and shapes.

### Example 7. Dynamic freeze drying of aminosilane/fibrillated cellulose feed suspension

The 1.5:1 suspension of Example 4 was broken into small, irregular particles (ca. 2-5 mm diameter) using a finisher (Finisher 8-FD-34, Hosokawa Micron Ltd.) and dropped directly in liquid nitrogen for freezing the suspension particles. The freeze drying operation was performed in a vacuum dryer (Hosokawa 06-VDC-41, Hosokawa Micron Ltd.) equipped with a non-heated mixing screw. Approximately 56 L (25.9 kg) of frozen 1.5:1 suspension particles were loaded, the freeze drying process was started and the required vacuum (3 mbar) was reached. The minimal product temperature was -13 °C and if it exceeded that temperature the jacket temperature was set to 5-25 °C. After 28 h of freeze drying under stirring, the total sublimated water amount was measured and indicated that the desired moisture content of the dried particles (smaller than 10% w/w) was reached. After the freeze drying operation 9.0 kg of dried product with a moisture content of 4.23% w/w was collected as well as 52 g of fines (0.6% w/w of final discharge) at the bottom of the filter. The amount of condensed water was 16.7 kg, consequently closing the mass balance of the drying operation. A sample taken from the dryer was taken and analyzed for CO₂ adsorption, size distribution, density and pressure drop.

The CO₂ capture capacity of the 1.5:1 adsorbent was 1.6 mmol CO₂/g at the conditions specified in Example 3. Therefore the CO₂ capacity is slightly less than for adsorbent particles produced via standard freeze drying (see Example 5), however, dynamic freeze drying is more economical than standard freeze drying so that final economic impact of a reduced CO₂ adsorption capacity has to be balanced with reduced cost of the drying operation.

The particle size analysis yielded the following result:

| | |
|---|---|
| • Bigger than 1.4 mm: | 71% w/w |
| • Between 1.4 mm and 1.0 mm: | 14% w/w |
| • Between 1.0 mm and 0.71 mm: | 7% w/w |
| • Between 0.71 mm and 0.5 mm: | 6% w/w |
| • Between 0.5 mm and 0.2 mm: | < 1 % w/w |
| • Smaller than 0.2 mm: | < 1 % w/w |

From the particle size analysis given above it can be concluded that frozen aminosilane/fibrillated suspension particles are useable for dynamic freeze drying, since first almost no fines below 0.2 mm particle size were produced, although the feed is continuously stirred, and second the particle size reduction from the frozen particles to the dried particles is less than one order of magnitude eventually resulting in a particle size distribution suitable to be used in a CO₂ adsorption structure as e.g. described in WO-A-2014/170184. Abrasion of particles yielding fines is an especially critical concern of dynamic freeze drying, which is mitigated through application of fibrillated cellulose. It is assumed that the entangled web of fibrillated cellulose fibers, especially for medium quality fibrillated cellulose, reduces abrasion. The bulk density of the dried product was 330 kg/m3 and is consequently considered very attractive for application in CO₂ adsorption structures. Finally the shape of the dried particles, together with their favorable size distribution, enable low pressure drop across packed beds, e.g. the pressure drop across a packed bed with a tapped bulk density of 361 kg/m3 was 6 Pa/cm at a gas (dried ambient air at ambient temperature and pressure) velocity of 5 cm/s.

### (Comparative)

### Example 8. Spray drying of aminosilane/fibrillated cellulose feed suspension

Fibrillated cellulose suspension as the one obtained in Example 2 was dewatered to yield a dry mass content of 9%. 10 kg of fibrillated cellulose having a dry mass content of 9% was mixed with 0.9 kg of 3-aminopropylmethyldiethoxysilane (APDES) and completed with water so that the final dry material content was 4%. The resulting suspension was stirred for 4 h and subsequently fed to a spray drier. The dried particles had the following particle size distribution:

| | |
|---|---|
| • Smaller than 25 µm (D10, v): | 10% v/v |
| • Smaller than 52 µm (D50, v): | 50% v/v |
| • Smaller than 120 µm (D90, v): | 90% v/v |

The bulk density of the produced particles was 360 kg/m3 and the CO₂ capture capacity was 1.15 mmol CO₂/g at conditions as specified in Example 3. Prior art has applied spray drying for drying aminosilane/fibrillated cellulose suspensions as e.g. described in WO-A-2014/170184, however not for use as CO₂ adsorbent. The particle size of adsorbent particles as obtained in this Example is too small for application in a CO₂ adsorption structure as e.g. described in WO-A-2014/170184, yielding excessive pressure drop across a packed bed of particles having the particle size distribution above. Therefore classical spray drying is considered not feasible for production of amine-functionalized fibrillated cellulose adsorbents.

### Example 9. Post agglomeration of spray dried aminosilane/fibrillated cellulose

In order to increase the particle size of the particles produced in Example 8 post agglomeration of the particles via fluidized bed spray granulation was performed, with the goal to increase the volume based D50 value above 100 µm. Throughout the tests two different binders were applied:
• 3-aminopropylmethyldiethoxysilane (APDES): 55 g of aqueous APDES solution (50% w/w APDES and 50% w/w water) were sprayed on 500 g of powder produced in Example 8. The powder was slightly agglomerated, however the agglomerated particles were not stable. Increasing the amount of binder to 156 g did not improve particle stability.
• Carboxymethyl cellulose (CMC, Akucell AF0305): 500 g of powder produced in Example 8 was agglomerated with 434 g of aqueous CMC suspension, containing 5% w/w CMC. The agglomeration was successful and the resulting particle distribution was:

| | |
|---|---|
| • <63 µm: | 14,5% v/v |
| • 63-200 µm: | 14,5% v/v |
| • 200-400 µm: | 25,7% v/v |
| • 400-800 µm: | 29,7% v/v |
| • 800-1000 µm: | 9,3% v/v |
| • >1000 µm: | 6,0% v/v |
| • D50 (volume based): | 363 µm |

The CO₂ capacity of the agglomerated product was 0.4 mmol/g at conditions as specified in Example 3. Thus it was found that agglomeration reduced the CO₂ capacity by factor 3 compared to the pristine sample. Consequently agglomeration of spray dried adsorbent particles by fluidized bed spray agglomeration is considered not feasible for production of amine functionalized fibrillated cellulose adsorbents since most likely amine functionalities are blocked by the binder.

### Example 9. Fluidized bed spray drying of aminosilane/fibrillated cellulose feed suspension

High quality fibrillated cellulose suspension as the one obtained in Example 2 was dewatered to yield a dry mass content of 9%. 50 kg of fibrillated cellulose having a dry mass content of 9% was mixed with 11.7 kg of 3-aminopropylmethyldiethoxysilane (APDES) and completed with water so that the final dry material content was 12%. The resulting suspension was stirred for 4 h and subsequently fed to a fluidized bed spray drier. The dried particles had the following particle size distribution:

| | |
|---|---|
| • Smaller than 17 µm (D10, v): | 10% v/v |
| • Smaller than 135 µm (D50, v): | 50% v/v |
| • Smaller than 510 µm (D90, v): | 90% v/v |

The bulk density of the produced particles was 399 kg/m3 and the CO₂ capture capacity was 1.7 mmol CO₂/g at conditions as specified in Example 3. Consequently application of high quality fibrillated cellulose as feedstock for production of amine functionalized fibrillated cellulose via fluidized bed spray drying is a feasible production method available on an industrial scale. Figure 6 shows a scanning electron microscopy image of adsorbent particles featuring high quality fibrillated cellulose as matrix and dried via fluidized bed spray drying. The particles feature a typical berry granulate shape, which is favorable for application in packed bed CO₂ capture processes.

By changing the parameters of the fluidized bed spray dryer the particle size distribution of dried product could be changed, however, the CO₂ capture capacity remained unchanged, i.e. by changing the parameters the following particle size distribution was obtained:

| | |
|---|---|
| • Smaller than 56 µm (D10, v): | 10% v/v |
| • Smaller than 240 µm (D50, v): | 50% v/v |
| • Smaller than 498 µm (D90, v): | 90% v/v |

The bulk density of the produced particles was 360 kg/m3 and the CO₂ capture capacity was 1.7 mmol CO₂/g at conditions as specified in Example 3.

In additional fluidized bed spray drying tests medium quality fibrillated cellulose as produced in Example 1 was used as feedstock: 85 kg of medium quality fibrillated cellulose (dry mass content of 12%) produced as described in Example 1 was mixed with 15 kg APDES and completed with water so that the final dry material content was 13%. The resulting suspension was stirred for 4 h and subsequently fed to a fluidized bed spray drier. The dried particles had the following particle size distribution:

| | |
|---|---|
| • Smaller than 19 µm (D10, v): | 10% v/v |
| • Smaller than 118 µm (D50, v): | 50% v/v |
| • Smaller than 295 µm (D90, v): | 90% v/v |

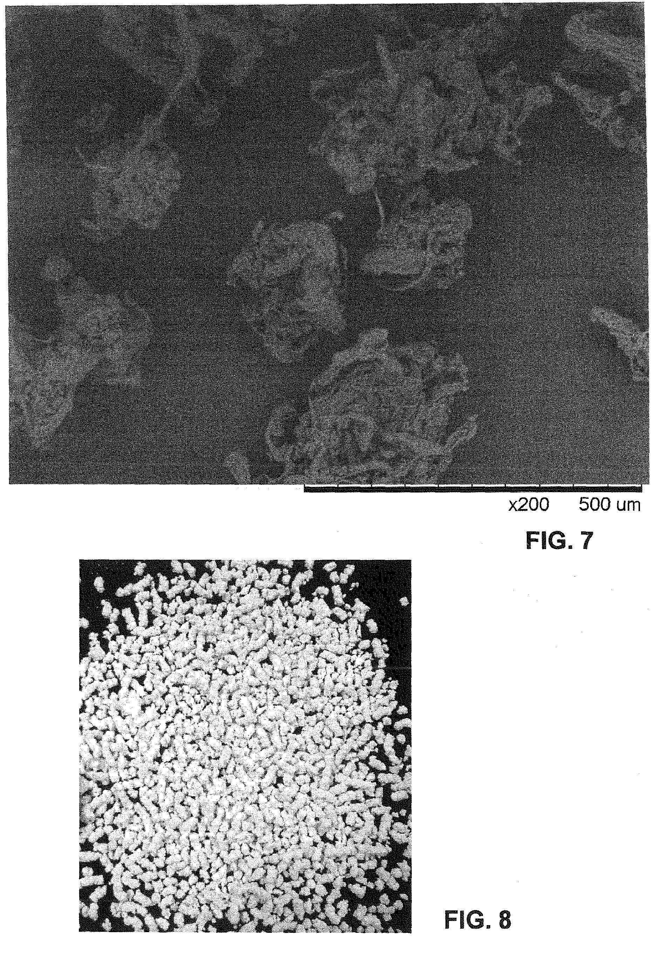

The bulk density of the produced particles was 204 kg/m3 and the CO₂ capture capacity was 1.4 mmol CO₂/g at conditions as specified in Example 3. Figure 7 shows a scanning electron microscopy image of adsorbent particles featuring medium quality fibrillated cellulose as matrix and dried via fluidized bed spray drying. The particles produced with medium quality fibrillated cellulose are fluffier in comparison to the particles obtained from high quality fibrillated cellulose, which is explained by longer fibers and higher degree of entanglement of medium quality fibrillated cellulose. Due to the fluffier nature the bulk density of particles produced from medium quality fibrillated cellulose is lower than the density of particles produced from high quality fibrillated cellulose.

Finally low quality fibrillated cellulose was used as feedstock for a fluidized bed spray drying test: 21 kg of low quality fibrillated cellulose (dry mass content of 9%) was mixed with 11 kg APDES and completed with water so that the final dry material content was 12%. The resulting suspension was stirred for 4 h and subsequently fed to a fluidized bed spray drier. The fluidization properties of the particles were poor, so that fluidized bed spray drying operation could not be completed. Consequently it can be concluded that low quality fibrillated cellulose is not feasible for application with fluidized bed spray drying.

### (Comparative)

### Example 11. Production of reference adsorbent featuring low quality fibrillated cellulose

Low quality fibrillated cellulose suspension as shown in Figure 1 with a dry mass content of 17% was used as adsorbent support (low quality fibrillated cellulose can i.e. be obtained as described by the production process of Example 1 where the number of passes is reduced to e.g. 3). 30 g of 3-aminopropylmethyldiethoxysilane (APDES) was mixed by kneading with 120 g of low quality fibrillated cellulose so that in total the suspension contains 1.5 g of APDES per 1 g of fibrillated cellulose (1.5:1). The resulting suspension contains a dry mass content of 27%. Finally the suspension was frozen in liquid nitrogen by pressing the suspension through a perforated metal plate with circular 5 mm openings and then dried in a freeze dryer for 24 h at a pressure of 0.1-1 mbar and a shelf temperature of 5-60 °C. For testing of the CO₂ capacity the protocol of Example 3 was slightly changed: instead of 1 g of adsorbent 5 g of adsorbent were used in the column and instead of 0.5 L/min adsorption gas flow 2 L/min adsorption gas flow was used. This modification was used to prevent minor bypassing as observed in Example 5. Other parameters remained unchanged. The equilibrium CO₂ adsorption capacity under the conditions specified in Example 3 was 1.6 mmol CO₂/g and is consequently lower than the equilibrium CO₂ capacity of the reference adsorbent featuring medium quality fibrillated cellulose described in Example 5 (1.9 mmol CO₂/g). The adsorbent particles had a cylindrical shape with a diameter of 5 mm, a length of 10 mm and the bulk density was 162 kg/m3. A photography of the adsorbent particles in shown in Figure 8. The breakthrough curve of the CO₂ adsorption measurement is shown in Figure 9. After 100 min and 200 min of CO₂ adsorption roughly 0.75 mmol CO₂/g and 1.25 mmol CO₂/g, respectively, were adsorbed. Therefore the CO₂ uptake rate is more or less comparable to the reference adsorbent featuring medium quality fibrillated cellulose described in Example 5.

### Example 12. Rheological properties of different qualities of fibrillated cellulose

The following example shows viscosity measurements of low, medium and high quality fibrillated cellulose (2% w/w in water) at 23 °C at a shear rates of 1000/s, 500/s and 100/s.

| | **Viscosity [Pa * s]** | | |
|---|---|---|---|
| **Shear rate [1/s]** | Low quality fibrillated cellulose | Medium quality fibrillated cellulose | High quality fibrillated cellulose |
| 1000 | 0.06 | 0.19 | 0.13 |
| 500 | 0.10 | 0.33 | 0.21 |
| 100 | 0.32 | 1.1 | 0.65 |

Surprisingly the viscosity of high quality fibrillated cellulose is lower than the viscosity of medium quality fibrillated cellulose. This underlines the fact that viscosity measurement alone is not useful for judging fibrillated cellulose quality but rather optical microscopy shall be used to quantify the quality. This finding is explained by the highly entangled nature of medium quality fibrillated cellulose, which in turn increases viscosity. Although the diameter of the fiber agglomerated of high quality fibrillated cellulose is smaller than the diameter of medium quality fibrillated cellulose, high quality fibrillated cellulose features smaller fibers and smaller areas of entanglement consequently reducing viscosity in comparison the medium quality fibrillated cellulose. Increasing the concentration of high quality fibrillated from 2% w/w to 4% w/w increases the viscosity at a shear rate of 1000/s from 0.13 Pa*s to 0.31 Pa*s.

## Claims

1. Method for the preparation of amine-functionalized fibrillated cellulose for reversible CO₂ adsorption from a gas mixture, in particular from exhaust gases or ambient air, with the following steps
(i) providing a suspension of fibrillated cellulose and adding a reagent for providing amine functionalities to the fibrillated cellulose;
(ii) mixing the resulting suspension for a time span allowing for the formation of a homogeneous suspension of fibrillated cellulose mixed and/or adsorbed and/or reacted with said reagent for providing amine functionalities;
(iii) drying the resulting homogeneous suspension from step (ii) resulting in surface amine-functionalized fibrillated cellulose and converting it into granular form with a bulk density of at least 150 kg/m3 (according to ISO 697);
wherein either
(a) in step (i) a suspension of fibrillated cellulose is provided with a dry mass content of fibrillated cellulose of at least 15% (dry matter content according to SCAN-CM 39:94), wherein the suspension with the active reagent for providing amine functionalities, resulting from step (1), has a dry mass content of fibrillated cellulose and active reagent for providing amine functionalities of at least 20% (dry matter content according to SCAN-CM 39:94), and wherein step (iii) involves freeze-drying of the surface amine-functionalized fibrillated cellulose
or
(b) in step (iii) fluidized spray drying is used for at the same time drying and converting into granular form
wherein in step (i) per 1g of fibrillated cellulose at least 0.5g of pristine reagent for providing amine functionalities are added
and wherein the reagent for providing amine functionalities to the fibrillated cellulose is selected as monoalkyldialkoxyaminosilane in its pristine or hydrolyzed form.

2. Method according to claim 1, wherein within (a)
the suspension of fibrillated cellulose provided in step (i) has a dry mass content of fibrillated cellulose of at least 20%, preferably of at least 25%, preferably of no more than 35% or 40%, most preferably in the range of 25-35%
and/or wherein per 1g of fibrillated cellulose at least 1g of pristine reagent for providing amine functionalities are added, preferably in the range 1-2g, preferably of no more than 3g, and/or wherein the mixed suspension resulting from step (ii) has a dry mass content of fibrillated cellulose and active reagent for providing amine functionalities of at least 18%, preferably of at least 30%, most preferably of at least 35%, preferably of no more than 72%, most preferably in the range of 30-45%.

3. Method according to any of the preceding claims, wherein in step (i) the reagent for providing amine functionalities is added in the form of an aqueous solution of the reagent for providing amine functionalities,
and/or wherein the reagent for providing amine functionalities is selected from at least one system of the following group: 3-aminopropylmethyldiethoxysilane; 3-aminopropylmethyldimethoxysilane; N-(2-Aminoethyl)-3-aminopropylmethyldimethoxysilane; N-(3-Methyldimethoxysilylpropyl)diethylenetriamine aminopropylmethyldisilanol and its self-condensed moieties in aqueous suspension; as well as mixtures thereof.

4. Method according to any of the preceding claims, wherein the reagent for providing amine functionalities is a hydrolyzed monoalkyldialkoxyaminosilane added in step (i) such that at least 0.5 g, preferably at least 1 g, most preferably in the range of 1 - 2 g, preferably of no more than 3g, of pristine aqueous aminosilane suspension per 1 g of fibrillated cellulose are added,
and/or wherein the said reagent for providing amine functionalities, comprising at least one monoalkyldialkoxyaminosilane, added in step (i) is provided as an aqueous solution in a concentration of at least 40% w/w, preferably at least 50% w/w, most preferably in the range of 50 - 80 % w/w,
and/or wherein the reagent for providing amine functionalities is provided as an aqueous solution free of organic solvents and/or wherein aqueous suspension resulting from step (i) is free of organic solvents.

5. Method according to any of the preceding claims, wherein within (a)
said step (ii) involves kneading of the mixed suspension over a time span of at least 5 or 10 min, preferably of at least 15 min, most preferably in the range of 20 - 120 min,
and/or wherein said step (ii) involves kneading of the mixed suspension at a temperature maintained over the process in the range of 5 - 35 °C, preferably in the range of 15 - 28 °C,
and/or wherein said step (ii) involves kneading of the mixed suspension in an extrusion scroll kneader at a scroll speed of at least 10 rpm, preferably at least 15 rpm, and/or at an extruder speed of at least -30 rpm, preferably of at least -40 rpm.

6. Method according to any of the preceding claims, wherein within (a)
in step (iii) the homogeneous suspension resulting from step (ii) is formed into granular form, preferably by pressing it through a multi-perforated plate, most preferably with openings of a diameter in the range of 2-10 mm or 3 - 7 mm, and/or by breaking into small, irregular particles, preferably particles of 2 - 5 mm diameter, using a finisher, and wherein the granules are subsequently frozen and then dried
and/or wherein in step (iii) the material is cooled by freezing in liquid nitrogen, cold gas and/or by contact with a cold surface.

7. Method according to any of the preceding claims, wherein within (a) in step (iii) the drying is carried out as a freeze-drying, wherein preferably during the freeze-drying process the granules are agitated, preferably using a non-heated mixing element, preferably in the form of a mixing screw.

8. Method according to any of the preceding claims, wherein the resultant granular amine-functionalized fibrillated cellulose has a bulk density of at least 170 kg/m3, preferably of at least 180 kg/m3, most preferably of at least 200 kg/m3, or has a bulk density in the range of 150-550 kg/m3, preferably in the range of 200-450 kg/m3;
and/or wherein the resultant granular amine-functionalized fibrillated cellulose has an equilibrium CO₂ adsorption capacity of at least 0.8 mmol CO₂/g, preferably of at least 1.0 mmol CO₂/g, most preferably of at least 1.2 mmol CO₂/g, or in the range of 0.8-2.5 mmol CO₂/g, preferably in the range of 1-2.5 mmol CO₂/g, in each case at 40-55 Pa CO₂ partial pressure, 30 °C and 60% relative humidity for prior CO₂ desorption at 90°C in a flow of humidified nitrogen;
and/or wherein the granular amine-functionalized fibrillated cellulose has a particle size distribution so that 50% of particles with respect to particle volume have a particle size of at least 80 µm, preferably of at least 100 µm, most preferably of at least 240 µm.

9. Method according to any of the preceding claims, wherein within (b) medium quality fibrillated cellulose with diameters below 10 µm and lengths below 250 µm, or high quality fibrillated cellulose, in which microfibril agglomerates have diameters below 5 µm and a length below 100 µm, is used in step (i).

10. Method according to any of the preceding claims, wherein within (b) in step (i) of fibrillated cellulose suspension with a dry mass content of 5-15% w/w is used, and/or wherein per 1g of fibrillated cellulose at least 0.5g of reagent for providing amine functionality are added, preferably at least 1g, most preferably in the range 1-2g, preferably of no more than 3g so that the mixed suspension resulting from step (ii) has a dry mass content of fibrillated cellulose and reagent for providing amine functionality of at least 2.5%, preferably of at least 10%, most preferably of at least 15%, preferably of no more than 42%, most preferably in the range of 10-20%.

11. Amine-functionalized fibrillated cellulose for reversible CO₂ adsorption from a gas mixture, in particular from exhaust gases or ambient air, preferably prepared using a method according to any of the preceding claims, wherein the amine-functionalized fibrillated cellulose has a bulk density of at least 150 kg/m3, preferably of at least 180 kg/m3, most preferably of at least 200 kg/m3, or has a bulk density in the range of 150-450 kg/m3, preferably in the range of 200-400 kg/m3.

12. Amine-functionalized fibrillated cellulose according to claim 11, wherein it has an equilibrium CO₂ adsorption capacity of at least 0.8 mmol CO₂/g, preferably of at least 1.0 mmol CO₂/g, most preferably of at least 1.2 mmol CO₂/g, or in the range of 0.8-2.5 mmol CO₂/g, preferably in the range of 1-2 mmol CO₂/g, in each case at 40-55 Pa CO₂ partial pressure, 30 °C and 60% relative humidity for prior CO₂ desorption at 90°C in a flow of humidified nitrogen;
and/or wherein it has a particle size distribution so that 50% of particles with respect to particle volume have a particle size of at least 80 µm, preferably of at least 100 µm, most preferably of at least 240 µm.

13. Amine-functionalized fibrillated cellulose according to claim 10 or 11, wherein the particles have an average diameter (d50) in the range of 100 µm-5 mm, preferably either in the range of 100-300 µm or in the range of 0.5-2.5 mm.

14. Use of amine-functionalized fibrillated cellulose according to any of claims 11-13, preferably produced using a method according to any of claims 1-10, for reversible CO₂ adsorption from a gas mixture.

15. Use according to claim 14 for reversible carbon dioxide adsorption from exhaust gases or ambient air.

## Patentansprüche

1. Verfahren zur Herstellung von aminfunktionalisierter fibrillierter Cellulose zur reversiblen CO2-Adsorption aus einem Gasgemisch, insbesondere aus Abgasen oder Umgebungsluft, mit den folgenden Schritten
(i) Bereitstellen einer Suspension von fibrillierter Cellulose und Zugabe eines Reagens zur Bereitstellung von Aminfunktionalitäten zur fibrillierten Cellulose;
(ii) Mischen der resultierenden Suspension während einer Zeitspanne, die die Bildung einer homogenen Suspension von fibrillierter Zellulose ermöglicht, die mit dem Reagenz zur Bereitstellung von Aminfunktionen gemischt und/oder adsorbiert und/oder umgesetzt wird;
(iii) Trocknen der resultierenden homogenen Suspension aus Schritt (ii), was zu aminfunktionalisierter fibrillierter Zellulose an der Oberfläche führt, und Überführen dieser in eine granulierte Form mit einer Schüttdichte von mindestens 150 kg/m3 (gemäß ISO 697);
wobei entweder
(a) in Schritt (i) eine Suspension von fibrillierter Cellulose mit einem Trockenmassegehalt an fibrillierter Cellulose von mindestens 15% (Trockenmassegehalt nach SCAN-CM 39: 94), wobei die aus Schritt (1) resultierende Suspension mit dem aktiven Reagenz zur Bereitstellung von Aminfunktionalitäten einen Trockenmassengehalt an fibrillierter Cellulose und aktivem Reagenz zur Bereitstellung von Aminfunktionalitäten von mindestens 20 % (Trockenmassegehalt gemäß SCAN-CM 39:94) aufweist, und wobei Schritt (iii) die Gefriertrocknung der oberflächenaminfunktionalisierten fibrillierten Cellulose beinhaltet
oder
(b) in Schritt (iii) eine fluidisierte Sprühtrocknung zur gleichzeitigen Trocknung und Umwandlung in eine Granulatform verwendet wird
wobei in Schritt (i) pro 1 g fibrillierter Cellulose mindestens 0,5 g unverdünntes Reagenz zur Bereitstellung von Aminfunktionalitäten zugegeben werden
und wobei das Reagenz zum Bereitstellen von Aminfunktionalitäten an die fibrillierte Cellulose als Monoalkyldialkoxyaminosilan in seiner ursprünglichen oder hydrolysierten Form ausgewählt wird.

2. Verfahren nach Anspruch 1, wobei in (a)
die in Schritt (i) bereitgestellte Suspension aus fibrillierter Cellulose einen Trockenmassengehalt an fibrillierter Cellulose von mindestens 20 %, vorzugsweise von mindestens 25 %, vorzugsweise von nicht mehr als 35 % oder
40 %, am meisten bevorzugt im Bereich von 25-35 %, aufweist
und/oder wobei pro 1 g fibrillierter Cellulose mindestens 1 g reines Reagenz zur Bereitstellung von Aminfunktionalitäten zugegeben wird, vorzugsweise im Bereich von 1-2 g, vorzugsweise von nicht mehr als 3 g, und/oder wobei die aus Schritt (ii) resultierende gemischte Suspension einen Trockenmassegehalt an fibrillierter Cellulose und aktivem Reagenz zur Bereitstellung von Aminfunktionalitäten von mindestens 18 %, vorzugsweise von mindestens 30 %, am meisten bevorzugt von mindestens 35 %, vorzugsweise von nicht mehr als 72 %, am meisten bevorzugt im Bereich von 30-45 % aufweist.

3. Verfahren nach einem der vorhergehenden Ansprüche, **dadurch gekennzeichnet, dass** in Schritt (i) das Reagenz zur Bereitstellung von Aminfunktionalitäten in Form einer wässrigen Lösung des Reagenzes zur Bereitstellung von Aminfunktionalitäten zugegeben wird,
und/oder wobei das Reagenz zur Bereitstellung von Aminfunktionalitäten ausgewählt ist aus mindestens einem System der folgenden Gruppe: 3-Aminopropylmethyldiethoxysilan; 3-Aminopropylmethyldimethoxysilan; N-(2-Aminoethyl)-3-aminopropyl-methyldimethoxysilan; N-(3-Methyldimethoxysilylpropyl)diethylentriamin; 3-Aminopropylmethyldisilanol und dessen selbstkondensierte Anteile in wässriger Suspension; sowie Mischungen davon.

4. Verfahren nach einem der vorhergehenden Ansprüche, wobei das Reagenz zur Bereitstellung von Aminfunktionen ein hydrolysiertes Monoalkyldialkoxyaminosilan ist, das in Schritt (i) zugegeben wird, so dass mindestens 0,5 g, vorzugsweise mindestens 1 g, am meisten bevorzugt im Bereich von 1 - 2 g, vorzugsweise nicht mehr als 3 g, reine wässrige Aminosilansuspension pro 1 g fibrillierter Cellulose zugegeben werden,
und/oder wobei das in Schritt (i) zugegebene Reagenz zur Bereitstellung von Aminfunktionalitäten, das mindestens ein Monoalkyldialkoxyaminosilan umfasst, als wässrige Lösung in einer Konzentration von mindestens 40 Gew.-%, vorzugsweise mindestens 50 Gew.-%, am meisten bevorzugt im Bereich von 50 - 80 Gew.-%, bereitgestellt wird
und/oder wobei das Reagenz zur Bereitstellung von Aminfunktionalitäten als wässrige Lösung, die frei von organischen Lösungsmitteln ist, bereitgestellt wird und/oder wobei die aus Schritt (i) resultierende wässrige Suspension frei von organischen Lösungsmitteln ist.

5. Verfahren nach einem der vorhergehenden Ansprüche, wobei in (a)
der Schritt (ii) das Kneten der gemischten Suspension über eine Zeitspanne von mindestens 5 oder 10 min, vorzugsweise von mindestens 15 min, am meisten bevorzugt im Bereich von 20 - 120 min, beinhaltet
und/oder wobei der Schritt (ii) das Kneten der gemischten Suspension bei einer Temperatur beinhaltet, die während des Prozesses im Bereich von 5 - 35 °C, vorzugsweise im Bereich von 15 - 28 °C, gehalten wird,
und/oder wobei der Schritt (ii) das Kneten der gemischten Suspension in einem Extrusionsschneckenkneter bei einer Schneckendrehzahl von mindestens 10 U/min, vorzugsweise mindestens 15 U/min, und/oder bei einer Extruderdrehzahl von mindestens -30 U/min, vorzugsweise von mindestens -40 U/min, umfasst.

6. Verfahren nach einem der vorhergehenden Ansprüche, wobei in (a)
in Schritt (iii) die aus Schritt (ii) resultierende homogene Suspension in Granulatform gebracht wird, vorzugsweise durch Pressen durch eine mehrfach perforierte Platte, am meisten bevorzugt mit Öffnungen mit einem Durchmesser im Bereich von 2-10 mm oder 3-7 mm, und/oder durch Brechen in kleine, unregelmäßige Partikel, vorzugsweise Partikel mit einem Durchmesser von 2-5 mm, unter Verwendung eines Finishers, und wobei das Granulat anschließend gefroren und dann getrocknet wird
und/oder wobei in Schritt (iii) das Material durch Gefrieren in flüssigem Stickstoff, kaltem Gas und/oder durch Kontakt mit einer kalten Oberfläche gekühlt wird.

7. Verfahren nach einem der vorhergehenden Ansprüche, wobei in (a) in Schritt (iii) die Trocknung als Gefriertrocknung durchgeführt wird, wobei vorzugsweise während des Gefriertrocknungsprozesses das Granulat gerührt wird, vorzugsweise unter Verwendung eines nicht beheizten Mischelements, vorzugsweise in Form einer Mischschnecke.

8. Verfahren nach einem der vorhergehenden Ansprüche, wobei die resultierende granulare aminfunktionalisierte fibrillierte Cellulose eine Schüttdichte von mindestens 170 kg/m3, vorzugsweise von mindestens 180 kg/m3, besonders bevorzugt von mindestens 200 kg/m3, oder eine Schüttdichte im Bereich von 150-550 kg/m3, vorzugsweise im Bereich von 200-450 kg/m3, aufweist;
und/oder wobei die resultierende granulare aminfunktionalisierte fibrillierte Cellulose eine Gleichgewichts-CO2-Adsorptionskapazität von mindestens 0,8 mmol CO2/g, vorzugsweise von mindestens 1,0 mmol CO2/g, besonders bevorzugt von mindestens 1. 2 mmol CO2/g, oder im Bereich von 0,8-2,5 mmol CO2/g, vorzugsweise im Bereich von 1-2,5 mmol CO2/g, jeweils bei 40-55 Pa CO2-Partialdruck, 30 °C und 60 % relativer Luftfeuchtigkeit für die vorherige CO2-Desorption bei 90 °C in einem Strom von befeuchtetem Stickstoff;
und/oder wobei die granulare aminfunktionalisierte fibrillierte Cellulose eine Teilchengrößenverteilung aufweist, so dass 50 % der Teilchen bezogen auf das Teilchenvolumen eine Teilchengröße von mindestens 80 µm, vorzugsweise von mindestens 100 µm, besonders bevorzugt von mindestens 240 µm aufweisen.

9. Verfahren nach einem der vorhergehenden Ansprüche, **dadurch gekennzeichnet, dass** in Schritt (b) fibrillierte Cellulose mittlerer Qualität mit Durchmessern unter 10 µm und Längen unter 250 µm oder fibrillierte Cellulose hoher Qualität, bei der Mikrofibrillenagglomerate Durchmesser unter 5 µm und eine Länge unter 100 µm aufweisen, verwendet wird.

10. Verfahren nach einem der vorhergehenden Ansprüche, wobei in (b) in Schritt (i) fibrillierte Cellulosesuspension mit einem Trockenmassegehalt von 5-15% w/w verwendet wird,
und/oder wobei pro 1 g fibrillierter Cellulose mindestens 0,5 g Reagenz zur Bereitstellung einer Aminfunktionalität zugegeben werden, vorzugsweise mindestens 1 g, am meisten bevorzugt im Bereich von 1 bis 2 g, vorzugsweise nicht mehr als 3 g, so dass die aus Schritt (ii) resultierende gemischte Suspension einen Trockenmassegehalt an fibrillierter Cellulose und Reagenz zur Bereitstellung einer Aminfunktionalität von mindestens 2,5 %, vorzugsweise von mindestens 10 %, am meisten bevorzugt von mindestens 15 %, vorzugsweise von nicht mehr als 42 %, am meisten bevorzugt im Bereich von 10 bis 20 % aufweist.

11. Aminfunktionalisierte fibrillierte Cellulose zur reversiblen CO2-Adsorption aus einem Gasgemisch, insbesondere aus Abgasen oder Umgebungsluft, vorzugsweise hergestellt nach einem Verfahren nach einem der vorhergehenden Ansprüche, wobei die aminfunktionalisierte fibrillierte Cellulose eine Schüttdichte von mindestens 150 kg/m3, vorzugsweise von mindestens 180 kg/m3, besonders bevorzugt von mindestens 200 kg/m3, oder eine Schüttdichte im Bereich von 150-450 kg/m3, vorzugsweise im Bereich von 200-400 kg/m3, aufweist.

12. Aminfunktionalisierte fibrillierte Cellulose nach Anspruch 11, **dadurch gekennzeichnet, dass** sie eine Gleichgewichts-CO2-Adsorptionskapazität von mindestens 0,8 mmol CO2/g, vorzugsweise von mindestens 1,0 mmol CO2/g, besonders bevorzugt von mindestens 1,2 mmol CO2/g, oder im Bereich von 0,8-2,5 mmol CO2/g, vorzugsweise im Bereich von 1-2 mmol CO2/g, jeweils bei 40-55 Pa CO2-Partialdruck, 30 °C und 60 % relativer Luftfeuchtigkeit bei vorheriger CO2-Desorption bei 90 °C in einem Strom von befeuchtetem Stickstoff aufweist; und/oder wobei es eine solche Partikelgrößenverteilung aufweist, dass 50 % der Partikel bezogen auf das Partikelvolumen eine Partikelgröße von mindestens 80 µm, vorzugsweise von mindestens 100 µm, besonders bevorzugt von mindestens 240 µm aufweisen.

13. Amin-funktionalisierte fibrillierte Cellulose nach Anspruch 10 oder 11, wobei die Teilchen einen durchschnittlichen Durchmesser (d50) im Bereich von 100 µm-5 mm, vorzugsweise entweder im Bereich von 100-300 µm oder im Bereich von 0,5-2,5 mm, aufweisen.

14. Verwendung von aminfunktionalisierter fibrillierter Cellulose nach einem der Ansprüche 11-13, vorzugsweise hergestellt nach einem Verfahren nach einem der Ansprüche 1-10, zur reversiblen CO2-Adsorption aus einem Gasgemisch.

15. Verwendung nach Anspruch 14 zur reversiblen Adsorption von Kohlendioxid aus Abgasen oder Umgebungsluft.

## Revendications

1. Méthode de préparation de cellulose fibrillée à fonction amine pour l'adsorption réversible de CO2 à partir d'un mélange de gaz, en particulier de gaz de combustion ou d'air ambiant, comprenant les étapes suivantes
(i) fournir une suspension de cellulose fibrillée et ajouter un réactif pour apporter des fonctionnalités amines à la cellulose fibrillée ;
(ii) mélange de la suspension obtenue pendant une durée permettant la formation d'une suspension homogène de cellulose fibrillée mélangée et/ou adsorbée et/ou réagissant avec ledit réactif pour fournir des fonctions amines ;
(iii) séchage de la suspension homogène obtenue à l'étape ii), ce qui permet d'obtenir de la cellulose fibrillée fonctionnalisée par des amines en surface et de la convertir en granulés d'une densité apparente d'au moins 150 kg/m3 (selon la norme ISO 697) ;
dans lequel
(a) à l'étape (i), une suspension de cellulose fibrillée est fournie avec une teneur en masse sèche de cellulose fibrillée d'au moins 15 % (teneur en matière sèche selon SCAN-CM 39 : 94), dans laquelle la suspension avec le réactif actif pour fournir des fonctionnalités amines, résultant de l'étape (1), a une teneur en masse sèche de cellulose fibrillée et de réactif actif pour fournir des fonctionnalités amines d'au moins 20 % (teneur en matière sèche selon SCAN-CM 39:94), et dans laquelle l'étape (iii) implique la lyophilisation de la cellulose fibrillée fonctionnalisée par des amines de surface
ou
(b) à l'étape (iii), le séchage par pulvérisation fluidisée est utilisé pour le séchage et la conversion sous forme de granulés.
dans lequel, à l'étape (i), on ajoute pour 1 g de cellulose fibrillée au moins 0,5 g de réactif vierge pour l'apport de fonctions amines
et dans lequel le réactif permettant de conférer des fonctions amines à la cellulose fibrillée est choisi comme étant le monoalkyldialkoxyaminosilane sous sa forme vierge ou hydrolysée.

2. Procédé selon la revendication 1, dans lequel en (a)
la suspension de cellulose fibrillée fournie à l'étape (i) a une teneur en masse sèche de cellulose fibrillée d'au moins 20 %, de préférence d'au moins 25 %, de préférence pas plus de 35 % ou 40 %, de préférence entre 25 et 35 %.
et/ou dans laquelle on ajoute, pour 1 g de cellulose fibrillée, au moins 1 g de réactif vierge destiné à fournir des fonctions amines, de préférence entre 1 et 2 g, de préférence pas plus de 3 g, et/ou dans laquelle la suspension mélangée résultant de l'étape (ii) a une teneur en masse sèche de cellulose fibrillée et de réactif actif destiné à fournir des fonctions amines d'au moins 18 %, de préférence d'au moins 30 %, de préférence d'au moins 35 %, de préférence pas plus de 72 %, de préférence encore entre 30 et 45 %.

3. Méthode selon l'une quelconque des revendications précédentes, dans laquelle, à l'étape (i), le réactif permettant d'obtenir des fonctions amine est ajouté sous la forme d'une solution aqueuse du réactif permettant d'obtenir des fonctions amine, et/ou dans lequel le réactif permettant d'obtenir des fonctions amine est choisi parmi au moins un système du groupe suivant : 3-aminopropylméthyldiéthoxysilane ; 3-aminopropylméthyldiméthoxysilane ; N-(2-Aminoéthyl)-3-aminopropyl-méthyldiméthoxysilane ; N-(3-Méthyldiméthoxysilylpropyl)diéthylènetriamine ; 3-aminopropylméthyldisilanol et ses fractions autocondensées en suspension aqueuse ; ainsi que leurs mélanges.

4. Méthode selon l'une quelconque des revendications précédentes, dans laquelle le réactif permettant d'apporter des fonctions amine est un monoalkyldialkoxyaminosilane hydrolysé ajouté à l'étape (i) de sorte qu'au moins 0,5 g, de préférence au moins 1 g, de préférence entre 1 et 2 g, de préférence pas plus de 3 g, de suspension aqueuse d'aminosilane vierge pour 1 g de cellulose fibrillée sont ajoutés,
et/ou dans lequel ledit réactif pour l'obtention de fonctions amine, comprenant au moins un monoalkyldialkoxyaminosilane, ajouté à l'étape (i) est fourni sous forme de solution aqueuse à une concentration d'au moins 40 % p/p, de préférence d'au moins 50 % p/p, de préférence encore de l'ordre de 50 à 80 % p/p,
et/ou dans laquelle le réactif destiné à fournir des fonctions amine est fourni sous forme de solution aqueuse exempte de solvants organiques et/ou dans laquelle la suspension aqueuse résultant de l'étape (i) est exempte de solvants organiques.

5. Méthode selon l'une quelconque des revendications précédentes, dans laquelle, à l'intérieur de (a)
ladite étape (ii) implique le malaxage de la suspension mélangée pendant une durée d'au moins 5 ou 10 minutes, de préférence d'au moins 15 minutes, de préférence encore entre 20 et 120 minutes,
et/ou dans laquelle ladite étape (ii) implique le malaxage de la suspension mélangée à une température maintenue pendant le processus entre 5 et 35 °C, de préférence entre 15 et 28 °C,
et/ou dans laquelle ladite étape (ii) implique le malaxage de la suspension mélangée dans un malaxeur à spirale d'extrusion à une vitesse de spirale d'au moins 10 tr/min, de préférence d'au moins 15 tr/min, et/ou à une vitesse d'extrusion d'au moins -30 tr/min, de préférence d'au moins -40 tr/min.

6. Procédé selon l'une quelconque des revendications précédentes, dans lequel au cours de l'étape (a)
à l'étape (iii), la suspension homogène résultant de l'étape (ii) est transformée en granulés, de préférence en la pressant à travers une plaque multiperforée, de préférence avec des ouvertures d'un diamètre compris entre 2 et 10 mm ou entre 3 et 7 mm, et/ou en la brisant en petites particules irrégulières, de préférence des particules de 2 à 5 mm de diamètre, à l'aide d'un finisseur, et dans laquelle les granulés sont ensuite congelés puis séchés
et/ou dans lequel, à l'étape iii), le matériau est refroidi par congélation dans de l'azote liquide, du gaz froid et/ou par contact avec une surface froide.

7. Méthode selon l'une quelconque des revendications précédentes, dans laquelle (a) à l'étape (iii), le séchage est effectué par lyophilisation, les granulés étant de préférence agités pendant le processus de lyophilisation, de préférence à l'aide d'un élément de mélange non chauffé, de préférence sous la forme d'une vis de mélange.

8. Procédé selon l'une quelconque des revendications précédentes, dans lequel la cellulose fibrillée fonctionnalisée aux amines qui en résulte a une densité apparente d'au moins 170 kg/m3, de préférence d'au moins 180 kg/m3, de préférence d'au moins 200 kg/m3, ou a une densité apparente comprise entre 150 et 550 kg/m3, de préférence comprise entre 200 et 450 kg/m3, et/ou dans lequel la cellulose fibrillée fonctionnalisée aux amines qui en résulte a une densité apparente d'au moins 170 kg/m3, de préférence d'au moins 180 kg/m3, de préférence d'au moins 200 kg/m3 ;
et/ou dans lequel la cellulose fibrillée granulaire fonctionnalisée aux amines qui en résulte a une capacité d'adsorption du CO2 à l'équilibre d'au moins 0,8 mmol CO2/g, de préférence d'au moins 1,0 mmol CO2/g, de préférence encore d'au moins 1. 2 mmol CO2/g, ou entre 0,8 et 2,5 mmol CO2/g, de préférence entre 1 et 2,5 mmol CO2/g, dans chaque cas à une pression partielle de CO2 de 40-55 Pa, à 30 °C et à 60 % d'humidité relative pour une désorption préalable du CO2 à 90 °C dans un flux d'azote humidifié ;
et/ou dans lequel la cellulose fibrillée granulaire fonctionnalisée aux amines présente une distribution granulométrique telle que 50 % des particules par rapport au volume des particules ont une taille d'au moins 80 µm, de préférence d'au moins 100 µm, et de préférence encore d'au moins 240 µm.

9. Procédé selon l'une quelconque des revendications précédentes, dans lequel on utilise à l'étape (b) de la cellulose fibrillée de qualité moyenne dont le diamètre est inférieur à 10 µm et la longueur inférieure à 250 µm, ou de la cellulose fibrillée de haute qualité, dans laquelle les agglomérats de microfibrilles ont un diamètre inférieur à 5 µm et une longueur inférieure à 100 µm.

10. Méthode selon l'une quelconque des revendications précédentes, dans laquelle on utilise à l'étape (i) (b) une suspension de cellulose fibrillée ayant une teneur en masse sèche de 5 à 15 % p/p,
et/ou dans laquelle on ajoute, pour 1 g de cellulose fibrillée, au moins 0,5 g de réactif pour l'obtention d'une fonction amine, de préférence au moins 1 g, de préférence entre 1 et 2 g, de préférence pas plus de 3 g, de sorte que la suspension mélangée résultant de l'étape (ii) présente une teneur en masse sèche de cellulose fibrillée et de réactif pour l'obtention d'une fonction amine d'au moins 2,5 %, de préférence d'au moins 10 %, de préférence d'au moins 15 %, de préférence pas plus de 42 %, de préférence dans la plage de 10 à 20 %.

11. Cellulose fibrillée fonctionnalisée à l'amine pour l'adsorption réversible de CO2 à partir d'un mélange de gaz, en particulier de gaz de combustion ou d'air ambiant, de préférence préparée à l'aide d'un procédé selon l'une quelconque des revendications précédentes, dans lequel la cellulose fibrillée fonctionnalisée à l'amine a une densité apparente d'au moins 150 kg/m3, de préférence d'au moins 180 kg/m3, de préférence encore d'au moins 200 kg/m3, ou a une densité apparente comprise entre 150 et 450 kg/m3, de préférence comprise entre 200 et 400 kg/m3.

12. Cellulose fibrée fonctionnalisée à l'amine selon la revendication 11, dans laquelle elle a une capacité d'adsorption du CO2 à l'équilibre d'au moins 0,8 mmol CO2/g, de préférence d'au moins 1,0 mmol CO2/g, de préférence d'au moins 1,2 mmol CO2/g, ou comprise entre 0,8 et 2,5 mmol CO2/g, de préférence comprise entre 1 et 2 mmol CO2/g, dans chaque cas à une pression partielle de CO2 de 40-55 Pa, à 30 °C et à une humidité relative de 60 % pour une désorption préalable du CO2 à 90 °C dans un flux d'azote humidifié ;
et/ou dans lequel la distribution de la taille des particules est telle que 50 % des particules par rapport au volume des particules ont une taille d'au moins 80 µm, de préférence d'au moins 100 µm, et de préférence encore d'au moins 240 µm.

13. Cellulose fibrillée fonctionnalisée à l'amine selon la revendication 10 ou 11, dans laquelle les particules ont un diamètre moyen (d50) compris entre 100 µm et 5 mm, de préférence entre 100 et 300 µm ou entre 0,5 et 2,5 mm.

14. Utilisation de la cellulose fibrillée fonctionnalisée aux amines selon l'une quelconque des revendications 11 à 13, de préférence produite à l'aide d'un procédé selon l'une quelconque des revendications 1 à 10, pour l'adsorption réversible du CO2 à partir d'un mélange de gaz.

15. Utilisation selon la revendication 14 pour l'adsorption réversible de dioxyde de carbone à partir de gaz de combustion ou de l'air ambiant.
